# EUROPEAN PATENT APPLICATION

(11) **EP 4 730 190 A1**
(43) Date of publication of application: **22.04.2026**
(21) Application number: 24207014.2
(22) Date of filing: 16.10.2024
(51) Int. Cl.: G06F 30/398, G06F 119/06, G06F 119/08

(54) **DETERMINING OF A TEMPERATURE MAP OF AN INTEGRATED CIRCUIT**

(71) Applicant: Imec VZW, 3001 Leuven (BE)
(72) Inventor: Vermeersch, Bjorn, 3001 Leuven (BE)
(74) Representative: Ipsilon Belgium

(57) **Abstract**

A method for determining a temperature map (70, 800) at a target resolution of an IC design (10), the method comprising: determining (200) a high-resolution power map (20) and a low-resolution power map (30); determining (400) a low-resolution temperature map (40) corresponding to the low-resolution power map; up-sampling (500) the low-resolution temperature map to the target resolution to obtain an intermediate temperature map (50); and for one or more ROIs: up-sampling (600) the low-resolution power map in the ROI (203) to the first, high resolution to obtain a local intermediate power map in the ROI (303); determining a difference between (601) the local intermediate power map and the high-resolution power map in the ROI (202), thereby obtaining a local differential power map (61) in the first, high resolution for the ROI; and determining (602) a local differential temperature map (62) in the target resolution corresponding to the local differential power map; and combining (700) the local differential temperature map with the intermediate temperature map in the ROI.

## Description

### Technical field

The present invention generally relates to a method for determining a temperature map of an integrated circuit, IC, design, and a data processing apparatus, a computer program product and a computer readable storage medium for performing such a method.

### Background

On an integrated circuit, IC, self-heating during operation is a common issue. Self-heating results from power dissipated by electronic components in the form of heat. As a result of self-heating, an increased temperature occurs on the IC during use. For example, heated regions may be formed over the IC. In addition, local hot spots may occur where the temperature reaches relatively high values compared to a region surrounding the hot spot.

An increased temperature may affect the performance of electronic components. For instance, an electronic component is usually provided to operate within certain performance margins only within specified temperature boundaries. The targeted performance may no longer be guaranteed when the component is subjected to a temperature higher than a specified maximal temperature. In extremis, an increased temperature may even lead to failure.

During design, a temperature map can be determined to identify the possible temperature distribution during use. This may be done by taking into account thermal interactions across the entire IC, i.e. including interactions between regions located relatively far away from each other. As such, a realistic temperature map can be obtained. Further, the resolution of a temperature map determines the level of detail that can be observed. For example, the resolution determines the minimal size of local hot spots that can be detected. The higher the resolution, the longer the computation time required to determine the temperature map. Thus, there is a trade-off between how quickly the temperature map can be obtained, which directly influences the total design time of the IC, and the level of detail shown on the temperature map.

It remains a challenge to quickly obtain a realistic temperature map at a high resolution.

### Summary

The present invention aims to alleviate at least some of the above mentioned obstacles.

The scope of protection sought for various embodiments of the invention is set out by the independent claims.

The embodiments and features described in this specification that do not fall within the scope of the independent claims, if any, are to be interpreted as examples useful for understanding various embodiments of the invention.

According to some aspects, there is provided the subject matter of the independent claims. Some further aspects are defined in the dependent claims.

According to a first aspect, a method is provided for determining a temperature map at a target resolution of an integrated circuit, IC, design. The method comprises:
- determining a high-resolution power map and a low-resolution power map of the IC design in a first, high resolution and a second, lower resolution respectively;
- determining a low-resolution temperature map corresponding to the low-resolution power map;
- up-sampling the low-resolution temperature map to the target resolution to obtain an intermediate temperature map;
- improving the accuracy of the intermediate temperature map for one or more regions of interest, ROIs, within the IC design to obtain the temperature map by, for each ROI of the one or more ROIs:
   - up-sampling the low-resolution power map in the ROI to the first, high resolution to obtain a local intermediate power map in the ROI;
   - determining a difference between the local intermediate power map and the high-resolution power map in the ROI, thereby obtaining a local differential power map in the first, high resolution for the ROI; and
   - determining a local differential temperature map in the target resolution corresponding to the local differential power map; and
   - combining the local differential temperature map with the intermediate temperature map in the ROI.

The second, lower resolution is lower than the first, high resolution. The target resolution is the desired resolution at which the temperature map is to be obtained. The target resolution is higher than the second, lower resolution. The target resolution may be higher than, lower than or equal to the first, high resolution.

In the ROIs, the method performs a superposition of temperature information at the target resolution onto the low-resolution temperature map. Thereto, the low-resolution temperature map of the entire IC is first up-sampled to the target resolution. As a result, the dimensions of the low-resolution temperature map match the dimensions of the superimposed temperature information. The up-sampled version of the low-resolution temperature map is referred to as the intermediate temperature map. The intermediate temperature map thus has the higher target resolution, yet contains low-resolution information.

The temperature information that is superimposed in a ROI improves the intermediate temperature map by including details at the target resolution. This information is based on differences between low-resolution and high-resolution power maps. To this end, the differential map captures discrepancies in the power domain resulting from the difference in resolution. The differential map is subsequently converted to the temperature domain to provide the additional temperature information in the ROI.

For the IC as a whole, the conversion from power map to temperature map is performed at the low resolution. This allows capturing macro-thermal interactions between different regions of the IC. Calculations at the low resolution suffice to detect such relatively large-scale effects. In the ROIs, the conversion of power map to temperature map is performed at the high resolution. This allows capturing localised thermal effects at a smaller level of detail in the ROIs. Calculations of the entire IC design are thus performed at the low resolution, while calculations in the ROIs are performed at the high resolution.

Because high-resolution calculations are only performed in the ROIs, the method is efficient and can be performed in a reduced computation time with respect to a high-resolution approach for the entire IC. By focusing on the ROIs for high-resolution calculations, the relevant localised information is still captured.

According to further example embodiments, determining the low-resolution power map comprises down-sampling the high-resolution power map to the second, lower resolution.

Down-sampling provides an uncomplicated way of obtaining the low-resolution map from the high-resolution power map. By down-sampling the high-resolution power map to obtain the low-resolution power map, the method can operate on a single input power map. Alternatively, high-resolution and low-resolution power maps may be obtained separately as input for the method, wherein the low-resolution power map may not be a down-sampled version of the high-resolution power map.

According to further example embodiments, the ROI is a region in the IC design that comprises at least part of a computational unit.

Such a computational unit may, for example, be a processor core. Computational units are configured to perform calculations during use of the IC and may therefore be power-consumption-intensive. Computational units are usually also configured to operate nearly continuously during use of the IC, whereas other components may often be idle. Thus, computational units may be responsible for a significant portion of the self-heating and may cause localised peak-temperatures. This makes it of interest to closely examine regions of the IC where computational units are positioned when determining the temperature map.

According to further example embodiments, the first and second resolutions are respectively characterised by a first and second unit length indicating a level of detail in the IC design, and the first unit length is smaller than the second unit length.

A unit length may, for example, be a physical length in the IC that corresponds to a pixel width or a voxel width of a map. The larger the difference between unit lengths corresponding to the second, low resolution and the first, high resolution, the more computational power and time are saved when performing the method.

Analogously, the target resolution may be characterised by a third unit length indicating a level of detail in the IC design, wherein the third unit length is smaller than the second unit length.

According to further example embodiments, the level of detail of the first unit length is in the order of the feature size of the process associated with the IC.

The feature size is a characteristic of the production technology to manufacture the IC according to the IC design. The feature size may, for example, be a width of a channel length of a transistor. According to example embodiments, the level of detail of the first unit length is at least 5 times, or at least 10 times larger than the feature size.

Analogously, the level of detail of the third unit length may be in the order of the feature size of the process associated with the IC.

According to further example embodiments, the second unit length is at least 2 times the first unit length.

For example, the second unit length may be 2 times, 10 times, 20 times or 80 times the first unit length. For example, the first unit length may be 0.25 microns and the second unit length may be 20 microns.

Analogously, the second unit length may be at least 2 times the third unit length.

According to further example embodiments, the IC design specifies a physical arrangement of electronic components of the IC.

According to further example embodiments, the high-resolution and low-resolution power maps are indicative of power consumption of the electronic components during operation of the IC.

According to further example embodiments, the low-resolution temperature map, the intermediate temperature map and the temperature map represent a temperature of the electronic components during operation of the IC.

According to further example embodiments, determining the high-resolution power map comprises computing voltage and current waveforms based on circuit analysis of the IC design under predetermined operation conditions.

Power consumption is determined by the voltages and currents occurring in the IC during use. In particular, the dependency between power, P, voltage, V, and current, I, is defined by the relationship P = UI. Thus, by taking the voltage and current waveforms into account, the resulting power map may be considerably accurate. This may further contribute to obtaining a realistic temperature map.

The operation conditions may comprise a time-averaged operation, or may comprise a peak operation.

According to further example embodiments, determining the low-resolution temperature map is further based on the physical arrangement of the electronic components of the IC design.

The physical positioning of the electronic components determines the interactions with respect to heating therebetween, i.e. the cross-heating resulting from self-heating of individual components. This goes for both neighbouring electronic components as well as electronic components located further away from each other. Taking into account the physical arrangement thus further contributes to obtaining a realistic temperature map.

According to further example embodiments, determining the one or more local differential temperature maps is further based on the physical arrangement of the electronic components of the IC design in the ROI.

According to further example embodiments, determining the low-resolution temperature map and determining the one or more local differential temperature maps is further based on thermal properties of materials of the corresponding electronic components.

Thermal properties include, inter alia: specific heat capacity, thermal conductivity and thermal diffusivity. These are properties that determine how corresponding electronic components behave under certain heating and temperature circumstances. In particular, these properties reflect how quickly and/or how easily heat released by the electronic components can spread out within materials and move between different materials and/or parts of the IC system. This may influence both localised as well as inter-component temperature effects. Taking these properties into account further contributes to obtaining a realistic temperature map.

According to further example embodiments, determining the low-resolution temperature map and determining the one or more local differential temperature maps is further based on packaging and system assembly components into which the electronic components are embedded.

According to a second aspect, a data processing apparatus is provided comprising at least one processor and at least one memory including computer program code, the at least one memory and computer program code configured to, with the at least one processor, cause the data processing apparatus to:
- determine a high-resolution power map and a low-resolution power map of the IC design in a first, high resolution and a second, lower resolution respectively;
- determine a low-resolution temperature map corresponding to the low-resolution power map;
- up-sample the low-resolution temperature map to the target resolution to obtain an intermediate temperature map;
- improve the accuracy of the intermediate temperature map for one or more regions of interest, ROIs, within the IC design to obtain the temperature map by, for each ROI of the one or more ROIs:
   - up-sampling the low-resolution power map in the ROI to the first, high resolution to obtain a local intermediate power map in the ROI;
   - determining a difference between the local intermediate power map and the high-resolution power map in the ROI, thereby obtaining a local differential power map in the first, high resolution for the ROI; and
   - determining a local differential temperature map in the target resolution corresponding to the local differential power map; and
   - combining the local differential temperature map with the intermediate temperature map in the ROI.

Such a data processing apparatus may provide one or more of the above-mentioned advantages.

According to a third aspect, a computer program product is provided comprising computer-executable instructions for performing the following steps when the program is run on a computer:
- determining a high-resolution power map and a low-resolution power map of the IC design in a first, high resolution and a second, lower resolution respectively;
- determining a low-resolution temperature map corresponding to the low-resolution power map;
- up-sampling the low-resolution temperature map to the target resolution to obtain an intermediate temperature map;
- improving the accuracy of the intermediate temperature map for one or more regions of interest, ROIs, within the IC design to obtain the temperature map by, for each ROI of the one or more ROIs:
   - up-sampling the low-resolution power map in the ROI to the first, high resolution to obtain a local intermediate power map in the ROI;
   - determining a difference between the local intermediate power map and the high-resolution power map in the ROI, thereby obtaining a local differential power map in the first, high resolution for the ROI; and
   - determining a local differential temperature map in the target resolution corresponding to the local differential power map; and
   - combining the local differential temperature map with the intermediate temperature map in the ROI.

Such a computer program product may provide one or more of the above-mentioned advantages.

According to a fourth aspect, a computer readable storage medium is provided comprising computer-executable instructions for performing the following steps when the program is run on a computer:
- determining a high-resolution power map and a low-resolution power map of the IC design in a first, high resolution and a second, lower resolution respectively;
- determining a low-resolution temperature map corresponding to the low-resolution power map;
- up-sampling the low-resolution temperature map to the target resolution to obtain an intermediate temperature map;
- improving the accuracy of the intermediate temperature map for one or more regions of interest, ROIs, within the IC design to obtain the temperature map by, for each ROI of the one or more ROIs:
   - up-sampling the low-resolution power map in the ROI to the first, high resolution to obtain a local intermediate power map in the ROI;
   - determining a difference between the local intermediate power map and the high-resolution power map in the ROI, thereby obtaining a local differential power map in the first, high resolution for the ROI; and
   - determining a local differential temperature map in the target resolution corresponding to the local differential power map; and
- combining the local differential temperature map with the intermediate temperature map in the ROI.

Such a computer readable storage medium may provide one or more of the above-mentioned advantages.

According to a fifth aspect, a data processing apparatus is provided comprising at least one processor and at least one memory storing instructions that, when executed by the at least one processor, cause the data processing apparatus to:
- determine a high-resolution power map and a low-resolution power map of the IC design in a first, high resolution and a second, lower resolution respectively;
- determine a low-resolution temperature map corresponding to the low-resolution power map;
- up-sample the low-resolution temperature map to the target resolution to obtain an intermediate temperature map;
- improve the accuracy of the intermediate temperature map for one or more regions of interest, ROIs, within the IC design to obtain the temperature map by, for each ROI of the one or more ROIs:
   - up-sampling the low-resolution power map in the ROI to the first, high resolution to obtain a local intermediate power map in the ROI;
   - determining a difference between the local intermediate power map and the high-resolution power map in the ROI, thereby obtaining a local differential power map in the first, high resolution for the ROI; and
   - determining a local differential temperature map in the target resolution corresponding to the local differential power map; and
   - combining the local differential temperature map with the intermediate temperature map in the ROI.

Such a data processing apparatus may provide one or more of the above-mentioned advantages.

According to a sixth aspect, a non-transitory computer program product is provided comprising instructions for performing the following steps when the computer program product is run on a computer:
- determining a high-resolution power map and a low-resolution power map of the IC design in a first, high resolution and a second, lower resolution respectively;
- determining a low-resolution temperature map corresponding to the low-resolution power map;
- up-sampling the low-resolution temperature map to the target resolution to obtain an intermediate temperature map;
- improving the accuracy of the intermediate temperature map for one or more regions of interest, ROIs, within the IC design to obtain the temperature map by, for each ROI of the one or more ROIs:
   - up-sampling the low-resolution power map in the ROI to the first, high resolution to obtain a local intermediate power map in the ROI;
   - determining a difference between the local intermediate power map and the high-resolution power map in the ROI, thereby obtaining a local differential power map in the first, high resolution for the ROI; and
   - determining a local differential temperature map in the target resolution corresponding to the local differential power map; and
   - combining the local differential temperature map with the intermediate temperature map in the ROI.

Such a non-transitory computer program product may provide one or more of the above-mentioned advantages.

According to a seventh aspect, a non-transitory computer readable medium is provided comprising instructions stored thereon for performing at least the following:
- determining a high-resolution power map and a low-resolution power map of the IC design in a first, high resolution and a second, lower resolution respectively;
- determining a low-resolution temperature map corresponding to the low-resolution power map;
- up-sampling the low-resolution temperature map to the target resolution to obtain an intermediate temperature map;
- improving the accuracy of the intermediate temperature map for one or more regions of interest, ROIs, within the IC design to obtain the temperature map by, for each ROI of the one or more ROIs:
   - up-sampling the low-resolution power map in the ROI to the first, high resolution to obtain a local intermediate power map in the ROI;
   - determining a difference between the local intermediate power map and the high-resolution power map in the ROI, thereby obtaining a local differential power map in the first, high resolution for the ROI; and
   - determining a local differential temperature map in the target resolution corresponding to the local differential power map; and
- combining the local differential temperature map with the intermediate temperature map in the ROI.

Such a non-transitory computer readable medium may provide one or more of the above-mentioned advantages.

The term "non-transitory" as used herein, is a limitation of the medium itself - i.e. a tangible medium and not a signal - as opposed to a limitation on data storage persistency, e.g. random-access memory, RAM, vs. read-only memory, ROM.

### Brief Description of the Drawings

Fig. 1 illustrates an integrated circuit, IC, design according to example embodiments;
Fig. 2 illustrates a method for determining a temperature map of an IC design according to example embodiments;
Fig. 3 illustrates steps for improving the accuracy of an intermediate temperature map for one or more regions of interest, ROIs, within an IC design according to example embodiments;
Fig. 4 illustrates a temperature map of an IC design according to example embodiments;
Fig. 5 illustrates a temperature map of an IC design according to example embodiments; and
Fig. 6 illustrates a cross-section of a 3D IC design according to example embodiments.

### Detailed Description of Embodiment(s)

The present disclosure relates to self-heating on an integrated circuit, IC, e.g. a system-on-chip, SoC, during operation. Self-heating result in localised as well as cross-region temperature effects. Temperature effects can be indicated by a so-called temperature map. Such a temperature map of an IC can be determined based on an IC design. An IC design may also be referred to as an IC lay-out or an IC arrangement plan and specifies the topography of electronic components of the IC. This may, for example, include a positioning of the electronic components on a chip as well as interconnections, such as conductive tracks or through-silicon vias, TSV, arranged between the components. An IC design may be a two-dimensional, 2D, or a three-dimensional, 3D, chip design, i.e. including stacked layers, e.g. interconnected by means of TSVs.

A temperature map illustrates the distribution of temperature over the IC design during operation. A temperature map can thus be virtually placed over the IC design to indicate the temperature distribution. In other words, in the temperature map, temperature values are indicated at each location of the IC design. Such a location may correspond to a pixel in the case of a 2D IC design, or a voxel in the case of a 3D IC design. The pixel/voxel size determines the level of detail of the temperature map. As such, a resolution of the temperature map may be characterised by such a pixel/voxel size.

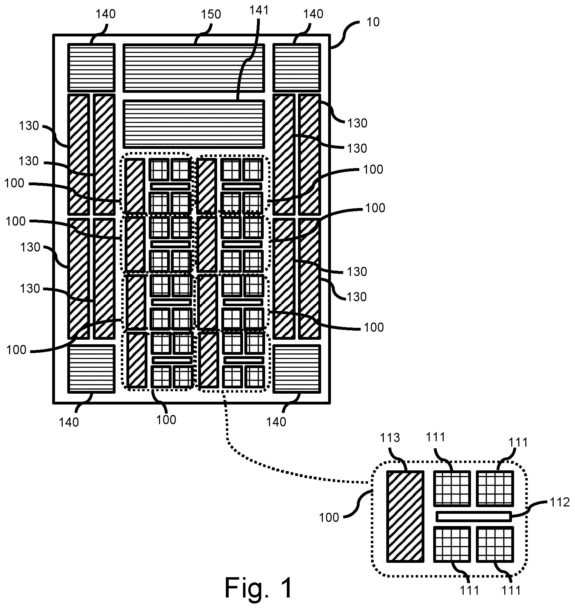

Figure 1 shows an IC design 10 of an SoC according to example embodiments.

The example IC design 10 specifies a physical arrangement of electronic components of the IC and comprises 8 central processing units, CPUs, 100 arranged in a 4-by-2 array. According to example embodiments, each central processing unit, CPU, 100 has the same functional components and the same arrangement. The CPUs 100 comprise four computational cores 111, a CPU bridge 112 to interface with the CPU 100, and a cache 113. Each CPU may, for example, be configured to consume 5 Watts, W, of power during operation. For example, each core 111 may be configured to consume 0.6 W during operation. Each CPU bridge 112 may be configured to consume 1 W during operation. Each cache 113 may be configured to consume 1.6 W during operation. Each core 111 may, for example, have a size of 1.25 millimetres, mm, by 1.25 mm.

Alternatively, different types of CPUs, e.g. consuming a different power, may be provided on the IC design 10.

The IC design 10 further comprises a number of double data rate, DDR, controllers 130, e.g. 8 DDR controllers 130 as illustrated in Figure 1. Such a DDR controller 130 may, for example, be configured to consume 3.5 W during operation. The IC design 10 further comprises a number of input/output, I/O, units 140, e.g. 4 I/O units 140 as illustrated in Figure 1. Such an I/O unit 140 may, for example, be configured to consume 1 W during operation. The IC design 10 further comprises a Peripheral Component Interconnect Express, PCIe, interface unit 150. Such a unit 150 may, for example, be configured to consume 15 W during operation. The IC design 10 further comprises other I/O units 141. Such a unit 141 may, for example, be configured to consume 7 W of power during operation.

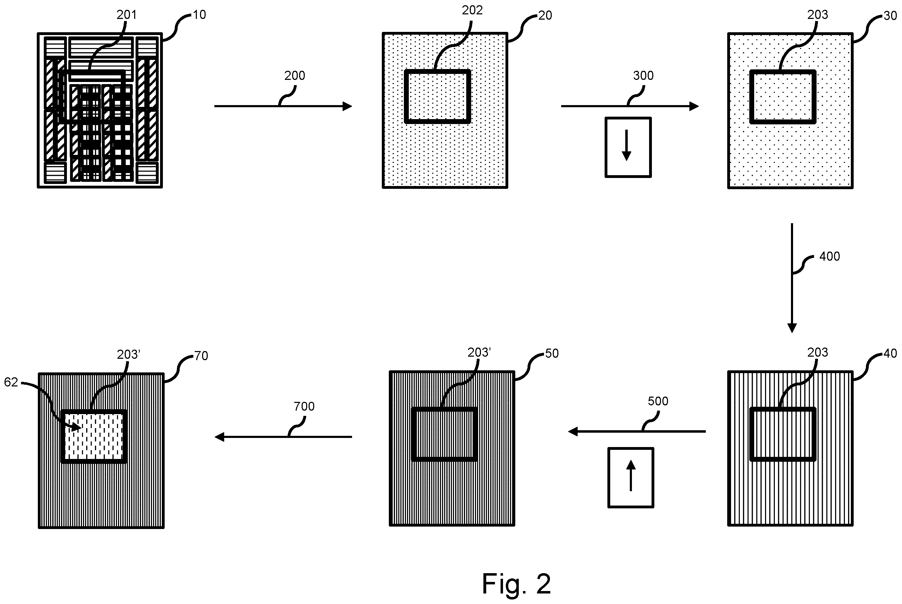

Figure 2 shows steps of a method for determining a temperature map 70 of an IC design, e.g. IC design 10 of Figure 1, according to example embodiments. The temperature map represents a temperature of the IC, e.g. in particular of the electronic components, during operation of the IC. The obtained temperature map 70 is at a target resolution, i.e. a predetermined desired resolution.

The method depicted in Figure 2 comprises determining 200 a high-resolution power map 20 of the IC design 10 in a first, high resolution. The power map 20 is a power map of the entire IC, i.e. a 'global' power map 20. The high resolution is characterised by a first unit length indicating a level of detail in the IC design. A level of detail of the first unit length may, for example, be in the order of the feature size of the production process associated with the IC. Such a feature size may, for example, be 150 nanometres, nm, as the channel length of a metal-oxide-semiconductor, MOS, transistor of the IC design. The first unit length can be a pixel length of the power map 20, i.e. the physical length in the IC design corresponding to the length of a pixel in the power map 20. Pixels and voxels are assumed to have square and cube shapes respectively and can thus be characterised by a single length.

The method further comprises determining a low-resolution power map 30 of the IC design in a second, low resolution. Power map 30 is also a global power map 30, i.e. determined for the entire IC design. The low resolution is lower than the high resolution. In other words, the first unit length is smaller than a second unit length, characterising the low resolution and indicating a level of detail in the IC design. For example, the second unit length may be a fractional multiple, e.g. 1.3, 1.5 or 10.1, of the first unit length. As another example, the second unit length may be at least two times the first unit length. If the second unit length is two times the first unit length, there are twice as many pixels in the power map 20 in both 2D directions than in power map 30. This would result in 4 times less pixels in power map 30 compared to power map 20.

The low-resolution power map 30 may, for example, be determined by down-sampling 300 the high-resolution power map 20 to the low resolution. Such a down-sampling step may comprise grouping pixels, or voxels, by averaging or may comprise applying another down-sampling scheme.

The power maps 20, 30 are indicative of power consumption of the electronic components during operation of an IC corresponding to the IC design 10. A power map 20, 30 may, for example, be obtained based on a predetermined operation of the IC. Determining a power map 20, 30 may comprise computing voltage and current waveforms based on circuit analysis of the IC design under such predetermined operation conditions. Different power maps 20 can be obtained based on different uses of the IC in terms of computational load in different parts of the IC. Power maps 20 can be obtained over a time interval based on a corresponding varying operation of the IC.

Further, the method comprises determining 400 a low-resolution temperature map 40 corresponding to the power map 30. The temperature map 40 represents a temperature of the IC, e.g. in particular of the electronic components, during operation of the IC. The step 400 comprises performing a temperature simulation based on the global, low-resolution power distribution 30. To achieve a realistic temperature map 40, determining the map 40 may be further based on the physical arrangement of the electronic components in the IC design and/or based on thermal properties of materials of the corresponding electronic components. Other parameters may also be taken into account to achieve an even more realistic temperature map 40.

By performing calculations 400 in the low-resolution domain, a significant saving of computational resources and computation time can be achieved. By performing the temperature simulation on the global IC design, cross-regional temperature effects can be captured as well as localised effects detectable at the low resolution. The temperature map 40 thus comprises low-resolution information of thermal effects over the entire IC design.

Further, the method of Figure 2 comprises up-sampling 500 the low-resolution temperature map to the target resolution to obtain an intermediate temperature map 50. The temperature map 50 represents a temperature of the IC, e.g. in particular of the electronic components, during operation of the IC. Up-sampling 500 may, for example, comprise performing nearest neighbour up-sampling, interpolation up-sampling, or another up-sampling scheme. It is noted that the target resolution is higher than the low resolution.

After up-sampling 500, further computations are performed in the regions of interest, ROIs, of the IC design to achieve a temperature map 70 that is improved in those ROIs. The intermediate temperature map 50 and the temperature map 70 are thus the same, except in the ROIs. A ROI is a region in the IC design found relevant with respect to temperature effects, i.e. a region comprising an electronic component that causes significant heating. A ROI may, for example, be a region in the IC design that comprises at least part of a computational unit, e.g. a CPU 100 or a CPU core 111. One or more ROIs may be manually selected or may be selected in an automated way by use of a computer, e.g. using a segmentation algorithm. In the latter case, a deep learning, DL, algorithm implementing a neural network, NN, may, for example, be applied.

Figure 2 illustrates a ROI 201 in the IC design 10. The ROI 201 is correspondingly indicated as ROIs 202, 203, 203' in the power maps 20, 30 and temperature maps 40, 50. Due to the down- and up-sampling 300, 500, borders of the ROIs 202, 203, 203' may be slightly misaligned, e.g. shifted by a pixel row or column. This does not impact the performance of the method. The regions 202, 203, 203' correspond to the same ROI 201, but are indicated using different reference numerals due to the possible misalignment explained above.

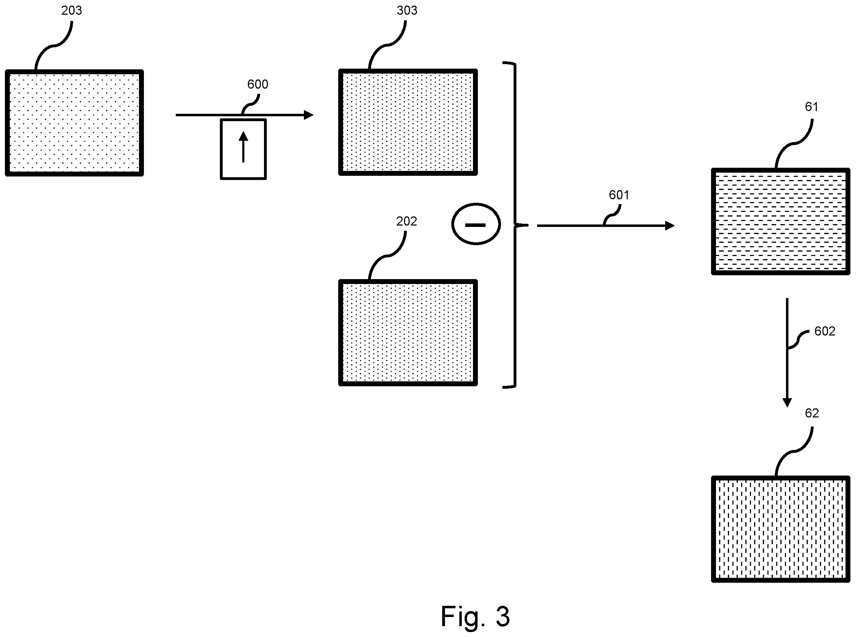

Figure 3 shows steps for improving the accuracy of the intermediate temperature map 50 for one or more ROIs 201 within the IC design to obtain the temperature map 70.

Firstly, a portion 203 of the low-resolution power map 30 corresponding to the ROI 201 is up-sampled 600 to the high resolution to obtain a local intermediate power map 303 in the ROI 201. Next, a difference between the power map 303 and a portion 202 of the high-resolution power map 20 is determined 601 in the ROI 201. This may, for example, include subtracting the power map 303 from the portion 202 of the power map 20, or, subtracting the portion 202 of the power map 20 from the power map 303. The up-sampling 600 is performed to allow element-wise subtraction 601, which can only be performed on data of the same size. As a result, a local differential power map 61 is obtained in the high resolution for the ROI 201. The power map 61 holds power information that differs between the low resolution map 30 and the high-resolution map 20. In other words, the difference, i.e. delta, Δ, is obtained that results from down-sampling the map 20 to the lower resolution. The power map 61 thus captures the small variations resulting from a pixel-wise comparison between the high-resolution ROI and the up-sampled ROI. It is noted that the total net power within the power map 61 may be equal to zero as a result of the down-sampling 300 / up-sampling 600.

Next, the power map 61 holding the Δ information is transformed 602 to the temperature domain. During the same step, the high-resolution power map 61 is converted to the target resolution. This may involve an additional up- or down-sampling step or may not require any additional steps in case the target resolution equals the high resolution. In other words, a local differential temperature map 62 corresponding to the power map 61 is determined 602 in the target resolution. The high-resolution simulation can be performed more efficiently, since it is only performed on the limited ROIs. To achieve a realistic temperature map 70, this may be based on the physical arrangement of the electronic components of the IC design in the ROI 201 and/or based on thermal properties of materials of the corresponding electronic components. Other parameters may also be taken into account to achieve an even more realistic temperature map 70.

It is noted that the target resolution may be higher than the high resolution. In this case, the temperature map 70 may not effectively comprise a level of detail higher than corresponding to the high resolution, since high-resolution power information is used as input to the method. Setting the target resolution higher than the high resolution may, however, be useful to provide the map 70 at a resolution directly useable for further processing. In such a case, a further up-sampling step may be avoided.

It is noted that the target resolution may be equal to the high resolution. This further adds to the efficiency of the method since no internal up- or down-sampling conversion steps are needed in the ROIs.

It is noted that the target resolution may be lower than the high resolution. This may, for example, be the case when the level of detail of the high resolution is not needed or possible considering memory limitations. Setting the target resolution lower than the high resolution may also result in faster computations in the ROIs.

Finally, in a combination step 700, the ROI information at the target resolution is combined with intermediate temperature map 50 to obtain the intended temperature map 70. The step 700 may comprise adding the local differential temperature map 62 to the intermediate temperature map 50 in the ROI. Optionally, a negative sign is introduced in this step, depending on how the subtracting 601 is performed. In other words, the portion 62 is superimposed, i.e. by means of an element-wise addition, onto the map 50 in the ROI 203'. This improves the temperature map 70 in the ROI 201, thereby providing a higher level of detail in the ROI 201. This allows detection of temperature effects at the level of detail of the target resolution in the ROI 201.

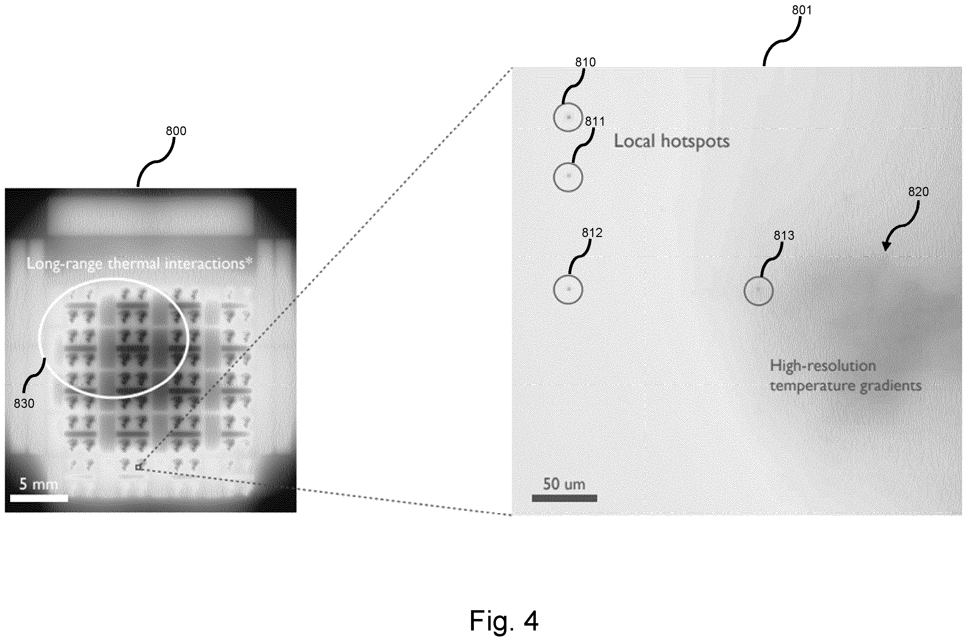

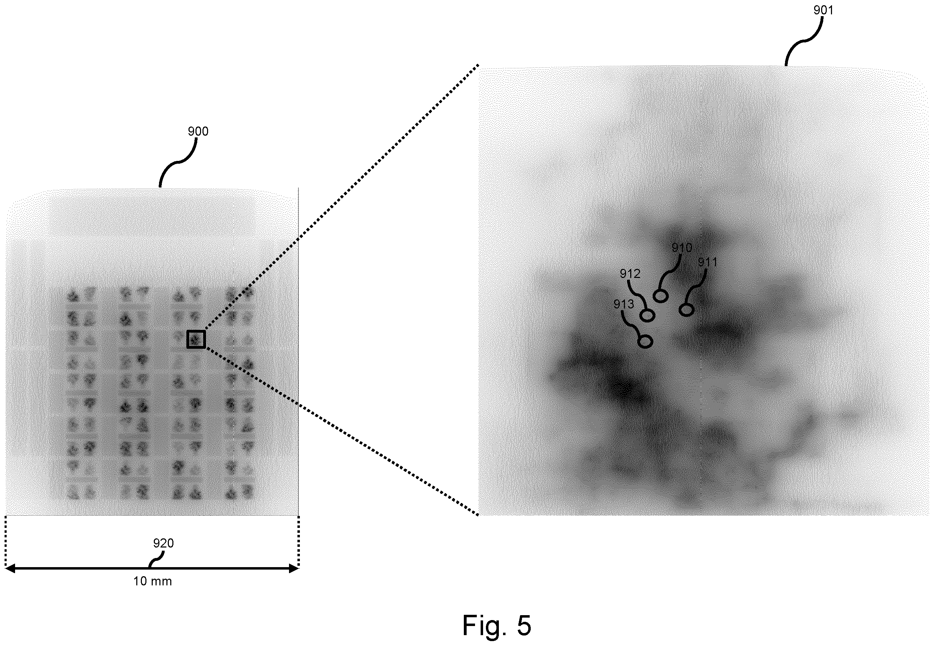

Figures 4 and 5 illustrate a temperature map of an IC design of a SoC having 20 CPUs arranged in a 4-by-5 array according to example embodiments. Plots 800, 900 correspond to temperature maps 70 obtained for different operational uses of a same IC design.

Plots 800 corresponds to a temperature map 70 achieved for an IC design when all CPUs perform the same operation, i.e. individual power maps over all 20 CPU regions look identical. Therefore, the differential power map 61 is identical for all 20 ROIs defined over the separate CPUs. As a result, computation 602 only needs to be performed once. The resulting high resolution differential temperature map 62 can be superimposed onto intermediate temperature map 50 at each of the 20 CPU regions to reveal the high-resolution temperature map 70 of the entire SoC.

Thus, for some example embodiments, not all calculations may need to be performed for each ROI separately. This may save both computational as well as memory resources.

Plot 900 corresponds to a temperature map 70 achieved for the same IC design with the CPUs performing a different operation, i.e. each of the 20 CPU regions has a distinct power map pattern. Here, computation 602 is therefore carried out individually for each of the 20 corresponding differential power maps 61. It is noted that, since the resulting differential temperature maps 62 are independent of one another, these computations 602 may be performed in parallel. This may lead to a speed-up of calculations. Superimposing the resulting high-resolution temperature maps 62 in the corresponding ROIs in the intermediate temperature map 50 results in the high-resolution temperature map 70 of the entire SoC.

Thus, for some example embodiments, calculations may need to be performed for each individual ROI separately. Even in such a case, the method may be performed efficiently, both with respect to computational power as well as necessary memory resources. A reason for the efficiency of the method is that computation time and memory required for converting power maps to the temperature domain may scale super-linearly with the number of temperature pixels. For example, the method therefore provides a superior efficiency with respect to a target-resolution brute force approach for obtaining the temperature map of the entire SoC as a whole.

In Figure 4, plot 800 of the temperature map illustrates long-range thermal interactions. These interactions are, for example, clearly visible in a region 830. For example, CPU regions near the centre of the SoC are at a higher temperature then CPU regions near the edges, in spite of all CPUs dissipating the same amount of power. Such cross-regional thermal interactions can, for example, be captured in the low-resolution temperature map 40. Further, region 801 is shown enlarged. Region 801 shows localised temperature effects only detectable at the target resolution, i.e. in a ROI. For example, local hotspots 810, 811, 812, 813 are visible. In addition, temperature gradients are visible at the higher, target resolution, see e.g. region 820.

Figure 5 shows plot 900 of the same IC design as plot 800, the IC having a width 920 of 10 mm. Another region 901 is shown enlarged. Due to the different scale of grey shades, details may appear slightly less visible than in Figure 4. Hot spots 910, 911, 912, 913 can be observed.

It is noted that a temperature map for a 3D IC design can be obtained instead of only a 2D temperature map. Such a 3D IC design comprises more details of the configuration of the IC, e.g. packaging and system assembly components into which the electronic components are embedded. A 3D temperature map obtained based on such a 3D IC design may provide useful information since additional heating-related behaviour of the IC can be taken into account.

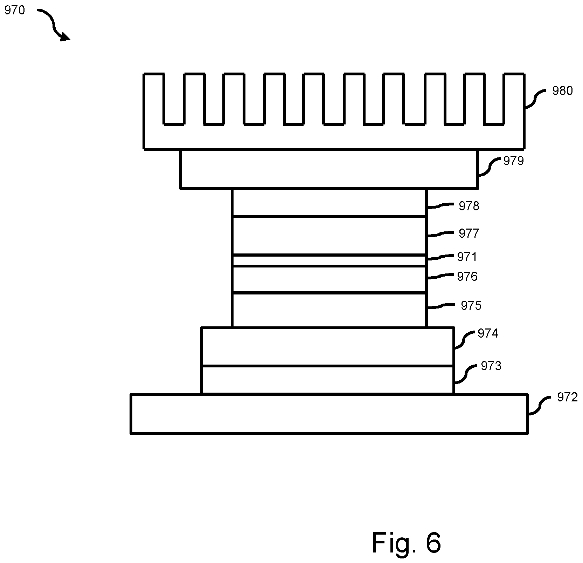

A cross-section of a 3D IC design according to example embodiments is illustrated in Figure 6.

Figure 6 schematically shows a cross-section 970 of a 3D IC. A 3D IC may comprise various stacked layers surrounding a layer holding the active components, i.e. active region 971. The active region 971 may, for example, correspond to a 2D temperature map 70. For example, the IC may comprise a stacking of: a printed circuit board, PCB, 972; a ball grid array, BGA, underfill layer 973; a package substrate layer 974; a controlled collapse chip connection, C4, layer 975 comprising C4 bumps; a back end of line, BEOL, layer 976; the active region 971; a silicon, Si, die layer 977; a thermal interface material, TIM, layer 978; a heat spreader 979; and a heat sink 980. 3D IC designs having different configurations may also be used as input for the method and may depend on the processing technology of choice. 3D temperature maps based on a 3D IC design allow evaluating certain adjustments to improve the self-heating properties of the IC, both within the active region 971 as well as in the other stacking layers 972-980. This may, for example, include rearrangement of electronic components, providing additional cooling elements, amending one or more of the stacked layers, e.g. by choosing other materials, et cetera.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for determining a temperature map (70, 800) at a target resolution of an integrated circuit, IC, design (10), the method comprising:
- determining (200) a high-resolution power map (20) and a low-resolution power map (30) of the IC design in a first, high resolution and a second, lower resolution respectively;
- determining (400) a low-resolution temperature map (40) corresponding to the low-resolution power map;
- up-sampling (500) the low-resolution temperature map to the target resolution to obtain an intermediate temperature map (50);
- improving the accuracy of the intermediate temperature map for one or more regions of interest, ROIs, within the IC design to obtain the temperature map by, for each ROI of the one or more ROIs:
- up-sampling (600) the low-resolution power map in the ROI (203) to the first, high resolution to obtain a local intermediate power map in the ROI (303);
- determining (601) a difference between the local intermediate power map and the high-resolution power map in the ROI (202), thereby obtaining a local differential power map (61) in the first, high resolution for the ROI; and
- determining (602) a local differential temperature map (62) in the target resolution corresponding to the local differential power map; and
- combining (700) the local differential temperature map with the intermediate temperature map in the ROI.

2. The method according to claim 1, wherein determining the low-resolution power map comprises down-sampling (300) the high-resolution power map to the second, lower resolution.

3. The method according to claim 1 or 2, wherein the ROI is a region in the IC design that comprises at least part of a computational unit.

4. The method according to any one of claims 1 to 3, wherein the first and second resolutions are respectively **characterised by** a first and second unit length indicating a level of detail in the IC design, and wherein the first unit length is smaller than the second unit length.

5. The method according to claim 4, wherein the level of detail of the first unit length is in the order of the feature size of the process associated with the IC.

6. The method according to claim 4 or 5, wherein the second unit length is at least 2 times the first unit length.

7. The method according to any one of the preceding claims, wherein the IC design specifies a physical arrangement of electronic components of the IC.

8. The method according to claim 7, wherein the high-resolution and low-resolution power maps are indicative of power consumption of the electronic components during operation of the IC.

9. The method according to claim 7 or 8, wherein the low-resolution temperature map, the intermediate temperature map and the temperature map represent a temperature of the electronic components during operation of the IC.

10. The method according to any one of the preceding claims, wherein determining the high-resolution power map comprises computing voltage and current waveforms based on circuit analysis of the IC design under predetermined operation conditions.

11. The method according to any one of claims 7-10, wherein determining the low-resolution temperature map is further based on the physical arrangement of the electronic components of the IC design.

12. The method according to any one of claims 7-11, wherein determining the one or more local differential temperature maps is further based on the physical arrangement of the electronic components of the IC design in the ROI.

13. The method according to any one of claims 7-12, wherein determining the low-resolution temperature map and determining the one or more local differential temperature maps is further based on thermal properties of materials of the corresponding electronic components.

14. A data processing apparatus comprising at least one processor and at least one memory including computer program code, the at least one memory and computer program code configured to, with the at least one processor, cause the data processing apparatus to:
- determine (200) a high-resolution power map (20) and a low-resolution power map (30) of the IC design in a first, high resolution and a second, lower resolution respectively;
- determine (400) a low-resolution temperature map (40) corresponding to the low-resolution power map;
- up-sample (500) the low-resolution temperature map to the target resolution to obtain an intermediate temperature map (50);
- improve the accuracy of the intermediate temperature map for one or more regions of interest, ROIs, within the IC design to obtain the temperature map by, for each ROI of the one or more ROIs:
- up-sampling (600) the low-resolution power map in the ROI (203) to the first, high resolution to obtain a local intermediate power map in the ROI (303);
- determining (601) a difference between the local intermediate power map and the high-resolution power map in the ROI (202), thereby obtaining a local differential power map (61) in the first, high resolution for the ROI; and
- determining (602) a local differential temperature map (62) in the target resolution corresponding to the local differential power map; and
- combining (700) the local differential temperature map with the intermediate temperature map in the ROI.

15. A computer program product comprising computer-executable instructions for performing the following steps when the program is run on a computer:
- determining (200) a high-resolution power map (20) and a low-resolution power map (30) of the IC design in a first, high resolution and a second, lower resolution respectively;
- determining (400) a low-resolution temperature map (40) corresponding to the low-resolution power map;
- up-sampling (500) the low-resolution temperature map to the target resolution to obtain an intermediate temperature map (50);
- improving the accuracy of the intermediate temperature map for one or more regions of interest, ROIs, within the IC design to obtain the temperature map by, for each ROI of the one or more ROIs:
- up-sampling (600) the low-resolution power map in the ROI (203) to the first, high resolution to obtain a local intermediate power map in the ROI (303);
- determining (601) a difference between the local intermediate power map and the high-resolution power map in the ROI (202), thereby obtaining a local differential power map (61) in the first, high resolution for the ROI; and
- determining (602) a local differential temperature map (62) in the target resolution corresponding to the local differential power map; and
- combining (700) the local differential temperature map with the intermediate temperature map in the ROI.
